# EUROPÄISCHE PATENTANMELDUNG

(11) **EP 0 523 360 A1**
(43) Veröffentlichungstag der Anmeldung: **20.01.1993**
(21) Anmeldenummer: 92109316.7
(22) Anmeldetag: 02.06.1992
(51) Int. Cl.: F16L 41/02, B21D 26/02

(54) **Y-Rohr sowie Verfahren zu seiner Herstellung**

(30) Priorität: 10.07.1991 DE 4122863
(71) Anmelder: Gesellschaft für Innenhochdruckverfahren mbH & Co.KG, D-73431 Aalen (DE)
(72) Erfinder: Ebbinghaus Alfred, W-7080 Aalen (DE); Bögel, Helmut, W-7080 Aalen (DE)
(74) Vertreter: Neidl-Stippler, Cornelia, Dr.

(57) **Zusammenfassung**

Die Erfindung betrifft ein ein- oder mehrlagiges Y-Rohr mit einer mindestens eine Metallschicht aufweisenden Wand, bei dem der Faserverlauf in der Metallschicht im wesentlichen parallel zur Wand ist und das Y-Rohr einstückig ist sowie ein Verfahren zu seiner Herstellung, bei dem man ein napfförmiges Teil in eine bewegliche Form bringt, das napfförmige Teile mit Fluid unter hohem Druck beaufschlagt und Material in Richtung der Symmetrieachse des napfförmigen Teils nachführt, so daß der Boden des napfförmigen Teiles Y-artig umgeformt wird; sowie Öffnen der Form und Ablassen des Drucks.

## Beschreibung

Die Erfindung betrifft ein ein- oder mehrlagiges Y-Rohr mit einer mindestens eine Metallschicht aufweisenden Wand sowie ein Verfahren zu seiner Herstellung.

Y-Rohre sind häufig verwendete Bauteile, beispielsweise zur Zusammenführung von Rohren im allgemeinen und werden zur Zeit bspw. für Zuleitungen zu Automobilkatalysatoren verwendet. Insbesondere dann, wenn sie in Verbindung mit Autokatalysatoren eingesetzt werden, sind die Y-Stücke starken mechanischen Beanspruchungen aufgrund der hohen Temperaturschwankungen unterworfen.

Bisher wurden Y-Rohre aufwendig durch Zusammenschweißen oder aber durch Verbinden eines im wesentlichen U-förmig gebogenen Rohres mit einem weiteren Rohr hergestellt.

Aus der FR-PS 875 173 sind bereits im wesentlichen Y-förmige Rohre mit teilweise parallelem Faserverlauf in den Wänden bekannt geworden, die aber aus mehreren Teilen zusammengefügt wurden. Durch dieses Zusammenfügen entstehen Verbindungsnähte oder -stellen, die zu Schwachstellen oder zumindest zu problematischerem Herstellen führen. Die derart hergestellten Y-Rohre wiesen im Bereich des Ansetzens des weiteren Rohrteils Verbindungsstellen auf, die bei thermischen Dauerbelastungen Schwierigkeiten machten, insbesondere beim ständig wechselnden Betrieb zwischen hohen und tiefen Temperaturen.

Der Erfindung liegt demzufolge die Aufgabe zugrunde, Y-Rohre oder auch Hosenrohre herzustellen, die mechanisch hoch wiederstandsfähig sind und ferner mit geringem Aufwand herstellbar sind.

Die Aufgabe wird erfindungsgemäß durch ein- oder mehrlagiges Y-Rohr mit einer mindestens eine Metallschicht aufweisenden Wand gelöst, bei dem der Faserverlauf in der Metallschicht im wesentlichen parallel zur Wand ist und das Y-Rohr einstückig ist.

Dabei kann es vorteilhaft sein, wenn das Y-Rohr eine im wesentlichen gleichmäßige Wanddicke besitzt.

Dabei ist es bevorzugt, daß mindestens eine Wandschicht s aus Metall besteht das ausgewählt ist aus der Gruppe bestehend aus Stählen, Aluminium Titan, Kupfer; Nickel oder Legierungen derselben.

Für viele Anwendungsfälle ist es günstig, wenn das Y-Rohr aus Stahl besteht.

Dabei sind bei einem einschichtigen Stahl-Y-Rohr (10) Wanddicken zwischen 0,8 mm und 5 mm, bevorzugt zwischen 1 mm und 2,5 mm und besonders bevorzugt zwischen 1 mm und 1,5 mm vorteilhaft.

Bei den Y-Rohren mit mehrschichtigen Wänden ist es besonders bevorzugt, wenn diese aus mehreren Lagen verschiedener Materialien, wie verschiedener oder gleicher Metalle oder Metall mit Kunststoff, Glas oder Keramik bestehen.

Zur Verstärkung oder auch für die Anbindung des Y-Stücks an andere rohre mittels Gewinden oder auch das Vorsehen von Querrippen im Y-Rohr (Soll-Stauchstelle) kann es erwünscht sein, daß es mindestens eine Rippe aufweist, die bei mehrschichtigen Ausführungsformen von allen Materialschichten parallel gebildet wird.

Diese Rippe(n) können bspw. Langsrippen, Querrippen oder spiralförmig verlaufende Rippen (Gewinde) sein, wobei die Rippe so ausgebildet sein kann, daß sie an mindestens einem Rohrende eine Sicke oder ein Gewinde bildet.

Die Erfindung betrifft ferner ein Verfahren zum Herstellen eines derartigen Y-Rohres, bei dem man ein napfförmiges Teil in eine bewegliche Form bringt das napfförmige Teile mit Fluid unter hohem Druck beaufschlagt und Material in Richtung der Syminetrieachse des napfförmigen Teils nachführt, so daß der Boden des napfförmigen Teiles Y-artig umgeformt wird; öffnen der Form und Ablassen des Drucks; ggf. Abtrennen der Böden der Y-Stücke unter Erhalt offener Rohrenden.

Durch das Nachführen des Materials während des Umformens kann eine im wesentlichen gleichmäßige Wanddicke erzielt werden.

Als Umformverfahren wird hier das als IHV oder Innenhochdruckverfahren bekannte Verfahren eingesetzt, wie es beispielsweise in "Metallumformtechnik", Ausgabe 1 D/91, Seiten 15 ff., A. Ebbinghaus: "Präzisionswerkstück in Leichtbauweise, hergestellt durch Innenhochdruck-Umformen" oder auch in "Werkstatt und Betrieb", Seite 241 - 242, A. Ebbinghaus "Wirtschaftliches Konstruieren mit innenhochdruck-umgeformten Präzisionswerkstücken" oder auch in "Werkstatt und Betrieb" 122 (1889) 11, S. 933 - 938 Ebbinghaus A., Pischel, H.: "Gesenkschmiede mit neuer Technologie" beschrieben wird. Dieses Verfahren ermöglicht es, durch die Anwendung von unter hohem Druck, bis 20000 bar stehenden Fluids im Hohlteilinneren, Hohlteile gegen eine Außenform so umzuformen, daß bei Nachführen von Material in Richtung der Rohrachse während des Umformens eine Schwächung der Wandstärken des zu formenden Teils vermieden wird, und auch, mehrschichtige Hohlkörper herzustellen und umzuformen, so daß eine mehrschichtige Wand, in der alle Wandschichten im wesentlichen parallel zueinander verlaufen und fest aufeinanderliegen, erzielt wird.

Bei der auf dieses Y-Teil angepaßten Verfahrensweise kann es sinnvoll sein, daß die Form an ihren unteren Enden Perforationsvorsprünge aufweist, die den sich umformenden Boden des Y-Stückes während der Umformung so perforieren, daß ein fertiges Y-Rohr mit 2 offenen Enden entsteht.

Für die Herstellung mehrschichtiger Formlinge kann es günstig sein, daß man mehrere ineinandergelegte napfförmige Teile verschiedener Materialien als Ausgangsmaterial für das Umformen nimmt.

Das Verfahren kann so gesteuert werden und die verwendete Form so eingesetzt werden, daß man das Y-Rohr zusätzlich in der Form mit Rippen ausformt.

Während des Umformens des Napfes zum Y-Stücke kann an mindestens einem Ende in ein Verbindungsprofil, eine Sicke, ein Gewinde, eingeformt werden.

Während dieses Umformens ist es auch möglich, auf den Rohrenden im Bereich der Öffnungen Sicken oder Gewinde einzuformen, um das Anschließen weiterer Rohre an dieses Verbindungsstück zu ermöglichen.

Unter Y-Rohren werden hier Rohre verstanden, bei denen der Winkel β zwischen den beiden Gabelenden des Ypsilons zwischen 20 und 120 Grad beträgt, also ein relativ kleiner Winkel.

Als Ausgangsmaterial für das Hochdruck-Umformen sind alle napfförmigen Teile geeignet, die aufgrund ihrer Materialeigenschaften teils verformbar sind, insbesondere solche, die zu einer Kaltverfestigung beim Verformen neigen. Dabei werden hier als napfförmige Teile alle einen Boden aufweisenden Hohlteile verstanden, der Querschnitt des napfförmigen Teils ist somit keineswegs auf die kreisrunde oder elliptische Form beschränkt sondern kann je nach Erfordernis ausgewählt werden.

Als Ausgangsmaterialien können ein- oder mehrschichtige napfförmige Teile verwendet werden, wobei hier als mehrschichtige Teile auch solche verstanden werden sollen, die als napfförmiges Ausgangsprodukt noch nicht aneinanderliegende Wände haben, also beispielsweise aneinander gesetzte Wände unterschiedliche Materialien sind, die sich erst beim Einbringen des Innenhochdrucks so aneinander anlegen, daß eine mehrschichtige Wand entsteht, die durch den beim Umformen erzielten Formschluß mit den übrigen Schichten verbunden ist.

Es ist nicht notwendig, daß alle Lagen eines mehrschichtigen Y-Rohrs aus dem gleichen Metall bestehen, es können auch verschiedene Metalle, je nach Anforderungen oder auch Kunststoffe und dergleichen, sofern sie sich in zufriedenstellendem Maße umformen lassen, eingesetzt werden.

Dies kann insbesondere dann sinnvoll sein, wenn aufgrund verschiedener Einflüsse, denen das Y-Rohr später ausgesetzt wird, beispielsweise innen eine korrosionsfeste Schicht erwünscht wird. Ferner kann es sinnvoll sein, eine Schalldämmschicht einzuziehen, wodurch das Y-Teil als solches weniger zu Schwingungen neigt und auch den Schall nicht so gut weiterleitet wie ein Teil aus einem einzigen Material. Üblicherweise werden nach dem Ausformen der beiden Gabelenden des Napfbodens später die noch geschlossenen Böden der beiden Gabelenden in üblicher Weise abgetrennt, es ist aber auch möglich, die Form so auszuarbeiten, daß sie an ihrem unteren Ende Perforationsteile aufweist, die den Boden des Y-Stückes während seiner Herstellung in der Umformung so perforieren, daß bereits ein fertiges Y-Rohr mit offenen Enden entsteht und eine weitere Bearbeitung entfallen kann.

Je nach Vorsehen der Form kann das Y-Rohr gleichzeitig beim Umformen an seinen Enden mit Verbindungsprofilen wie ????, Gewinden und dergleichen umgeformt werden.

Allgemein soll festgestellt werden, daß hier unter der Bezeichnung "Rohr" nicht nur Rohre mit kreisförmigem Querschnitt, sondern auch solche mit quadratischen, sechseckigen oder sonstigen polygonen, regelmäßigen oder unregelmäßigen Formen verstanden werden, das gleiche gilt für die napfförmigen Ausgangsteile.

Nachfolgend soll das Y-Rohr sowie das Verfahren zu seiner Herstellung anhand der begleitenden Zeichnungen erläutert werden, wobei die Erfindung keineswegs auf diese Zeichnungen beschränkt sein sollten.

Dabei zeigt in schematischer, nicht maßstäblicher Darstellung, auf die die Erfindung keineswegs beschränkt sein soll:
- Fig. 1: einen Längsschnitt durch ein erfindungsgemäß hergestelltes Y-Rohr in schematisierter Darstellung des Faserverlaufes in demselben;
- Fig. 2a: den Ausgangsnapf;
- Fig. 2b: das aus dem Napf gebildete Y-Rohr;
- Fig. 3: einen Querschnitt durch ein Y-Rohr mit Längsrippen entlang der Linie A-A der Fig. 2b
- Fig. 3a: das Ausgangsprodukt für ein mehrlagiges Hosenrohr;
- Fig. 3b: ein aus dem Ausgangsprodukt der Fig. 3a fertig geformtes mehrschichtiges Hosenrohr; und
- Fig. 4: einen Längsschnitt durch ein erfindungsgemäß hergestelltes zweischichtiges Hosenrohr unter Andeutung des darin stattfindenden Faserverlaufs.

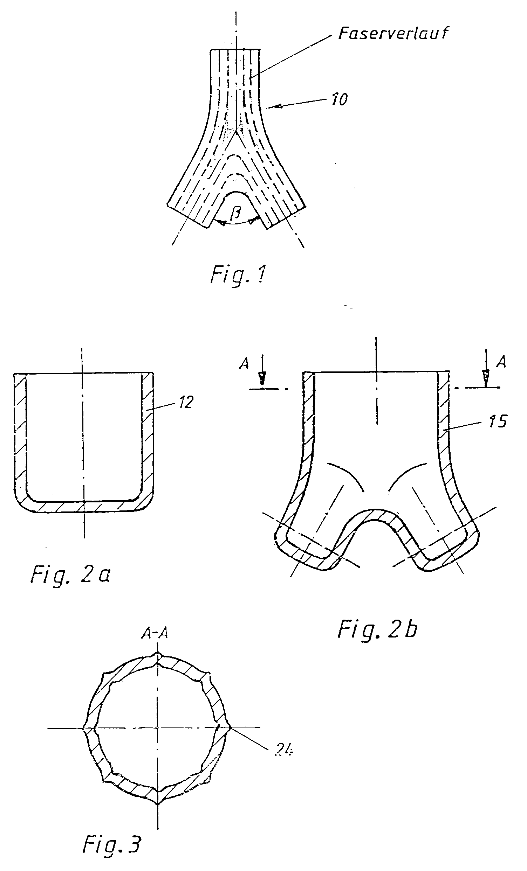

In Figur 1 ist schematisch der Faserverlauf in der Draufsicht auf ein erfindungsgemäß hergestelltes metallisches Y-Rohr aus einem Metall, hier Stahl, gezeigt, woraus sich ergibt, daß erfindungsgemäß ein ununterbrochener Faserverlauf in den Wänden der Y-Rohrabschnitte vorliegt, was zu einer hohen Widerstandsfähigkeit und Belastbarkeit des einfach herzustellenden Y-Rohres führt.

In Figur 2 a ist ein napfförmiges Teil dargestellt, das als Ausgangsmaterial für ein derartiges Y-Rohr 10, wie es in Fig. 1 gezeigt ist, eingesetzt wird.

In Figur 2 b ist das daraus hergestellte umgeformte Produkt 15 dargestellt, das hier noch geschlossene Enden besitzt, die an denr mit unterbrochenen Linien gezeichneten Stelle später abgetrennt werden.

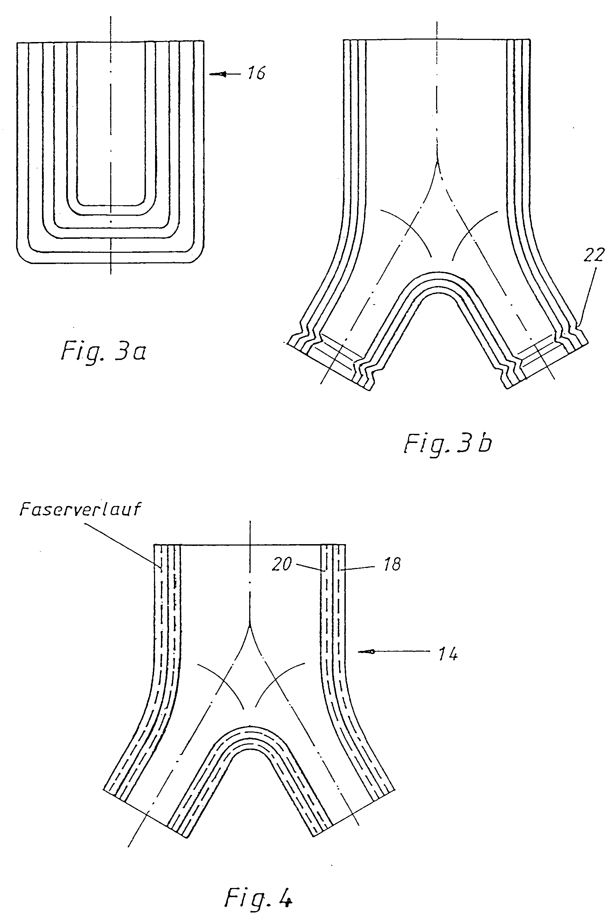

In Fig. 3 ist ein Querschnitt durch eine besondere Ausführungsform des erfindungsgemäßen Y-Rohres mit Längsrippen gezeigt, die zur einer erhöhten Widerstandsfähigkeit des Y-Stücks gegenüber mechnaischen Belastungen fürht, und auch dazu dienen kann, das Gewicht eines Teils bei gleichen günstigen mechanischen Eigenschaften gering zu halten. Deutlich erkennt man die hier im Querschnitt dargestellten Verstärkungsrippen 24.

In Figur 3 a ist ein Ausgangsprodukt für ein mehrlagiges Hosenrohr zu sehen, wobei deutlich zu ersehen ist, daß hier drei Näpfe unterschiedlicher Durchmesser und unterschiedlicher Materialien, nämlich von Stahl, Keramikfasermatte und Stahl für das Ausgangsprodukt 16 ineinandergesetzt sind.

In Figur 3 b ist gezeigt, wie diese ineinandergesetzten Näpfe durch das Innenhochdruckumformverfahren aneinandergepreßt worden sind und nun ein mehrlagiges Y-Rohr darstellen. Hierbei wurde zum Umformen eine Form mit einem Perforationsteil eingesetzt, die es ermöglichte, sogleich aus dem napfförmigen Boden beim Umformen geöffnete Rohrenden herzustellen, so daß ein späteres Abtrennen, wie es bei der Fig. 2b angedeutet ist, hier entfallen kann. Bei dieser Ausführungsform ist an den Enden der Y-Teile auch jeweils eine Sicke 22 angeformt, die zur Verbindung mit anderen Rohren günstig sein kann.

In Figur 4 ist ein mehrlagiges Y-Rohr im Längsschnitt schematisch dargestellt, woraus sich ergibt, daß auch hier der günstige Faserverlauf in allen Schichten vorhanden ist und demzufolge zu einer gleichmäßigen Belastbarkeit und Beanspruchbarkeit der derart geformten Wände des Y-Teiles führt.

Insgesamt ist festzustellen, daß die erfindungsgemäß geformten Y-Stücke leichter, belastbarer und mit weniger Aufwand herzustellen sind als die bisher üblichen Teile und aufgrund ihres guten Faserverlaufs höheren Beanspruchungen standhalten, da keine Störungsstellen im Metall auftreten.

Es ist nunmehr auch erstmals möglich, in völlig zufriedenstellender Form ein mehrlagiges Y-Rohr 14 herzustellen, dessen verschiedene Schichten 20, 18 den jeweiligen Beanspruchungen gerecht werden können.

So ist es z.B. möglich, die hohe Druckfestigkeit oder mechanische Belastbarkeit von Stahl mit einer hohen Säurefestigkeit bestimmter Kunststoffe zu verbinden oder auch Metalle, die sich gut passivieren und damit gegenüber chemischen Angriffen resistent sind, wie beispielsweise Aluminium oder auch Zink in bestimmten Fällen, als Innenschichten vorzusehen 20, ohne daß die nachteiligen Eigenschaften dieser Materialien, nämlich die geringe mechanische Festigkeit und eine geringe Elastizität, in Kauf genommen werden müssen, da eine entsprechende zweite äußere Wand 18, die als Stützwand fungieren kann und bei der in Fig. 4 dargestellten Ausführungsform aus Stahl ist, für die mechanische Widerstandsfähigkeit des mehrschichtigen Y-Rohres sorgt.

Allgemein ist festzustellen, daß auch dieses mehrschichtige Y-Rohr analog der Fig. 3 mit angeformten Verstärkungsrippen 24 ausgebildet werden kann, die bei gleichem Gewicht zu einer erheblich höheren Widerstandsfähigkeit gegenüber Stauchen oder auch sonstigen Belastungen führen können. Durch das Vorsehen von Verstärkungsprofilen 24 oder dergleichen ist es möglich, mit einem weiter verminderten Gewicht Stahlteile herzustellen, was insbesondere in Anbetracht von hohen Transportkosten oder auch von hohen Kraftfahrzeuggewichten, die vermieden werden sollen, äußerst erwünscht sein kann.

Als Materialien für das Innenhochdruckumformverfahren kommen bspw. als Metalle mit Stützfunktion - wobei diese Aufzählung keinesfalls einschränkend sein soll - sowohl unlegierte Stähle als auch Einsatzstähle legiert und unlegiert, Vergütungsstähle, ebenfalls legiert und unlegiert, warmfeste Stähle, nicht rostende Stähle, Aluminium sowie dessen Legierungen, Titan und dessen Legierungen, Kupfer und dessen Legierungen sowie Nickel in Frage, wobei es hierbei nur notwendig ist, daß diese Stoffe sich für das Fließpressen, Tiefziehen oder mechanische Rohrumformverfahren eignen.

Ferner ist festzustellen, daß die als Ausgangsprodukte eingesetzten napfförmigen Teile durch die verschiedensten Verfahren hergestellt sein können, beispielsweise durch Tiefziehen, es kann aber genausogut auch ein gebohrtes Teil bei entsprechend spröden Materialien als Schichtmaterial eingesetzt werden - prinzipiell ist es gleichgültig, wie das napfförmige Teil hergestellt wurde, es ist lediglich wichtig, daß das napfförmige Teil unter den Bedingungen des Innenhochdruck-Umformverfahrens zufriedenstellend verarbeitbar ist, wobei es bevorzugt ist, wenn es sich um nahtlose napfförmige Teile handelt, da Nähte sich im Umformverfahren nicht verhalten wie das übrige Metall und zu Störungen im Faserverlauf führen können.

## Patentansprüche

1. Ein- oder mehrlagiges Y-Rohr mit einer mindestens eine Metallschicht aufweisenden Wand, dadurch gekennzeichnet, daß der Faserverlauf in der Metallschicht im wesentlichen parallel zur Wand ist und daß das Y-Rohr einstückig ist.

2. Y-Rohr nach Anspruch 1, dadurch gekennzeichnet, daß es eine im wesentlichen gleichmäßige Wanddicke besitzt.

3. Y-Rohr nach Anspruch 1 oder 2, dadurch gekennzeichnet, daß die Wanddicke bei einem einschichtigen Stahl-Y-Rohr (10) zwischen 0,8 mm und 5 mm, bevorzugt zwischen 1 mm und 2,5 mm und besonders bevorzugt zwischen 1 mm und 1,5 mm liegt.

4. Y-Rohr nach einem der vorangehenden Ansprüche, dadurch gekennzeichnet, daß die Metallschicht(en) ausgewählt sind aus der Gruppe bestehend aus Stählen, Aluminium, Titan, Kupfer, Nickel oder Legierungen derselben.

5. Y-Rohr nach einem der vorangehenden Ansprüche, dadurch gekennzeichnet, daß es aus Stahl besteht.

6. Y-Rohr nach einem der Ansprüche 1 bis 4, dadurch gekennzeichnet, daß es aus mehreren Lagen verschiedener Materialien, verschiedener oder gleicher Metalle oder Metall mit Kunststoff, Glas oder Keramik besteht.

7. Y-Rohr nach einem der vorangehenden Ansprüche, dadurch gekennzeichnet, daß es mindestens eine Rippe (22) aufweist.

8. Y-Rohr nach Anspruch 7, dadurch gekennzeichnet, daß die Rippe(n) (24) Längsrippen, Querrippen oder spiralförmig verlaufende Rippen sind.

9. Y-Rohr nach Anspruch 7 oder 8, dadurch gekennzeichnet, daß die Rippe so ausgebildet ist, daß sie an mindestens einem Rohrende eine Sicke (22) oder ein Gewinde bildet.

10. Verfahren zum Herstellen eines Y-Rohres nach einem der vorangehenden Ansprüche, dadurch gekennzeichnet, daß man ein napfförmiges Teil in eine bewegliche Form bringt das napfförmige Teile mit Fluid unter hohem Druck beaufschlagt und Material in Richtung der Symmetrieachse des napfförmigen Teils nachführt, so daß der Boden des napfförmigen Teiles Y-artig umgeformt wird; Öffnen der Form und Ablassen des Drucks.

11. Verfahren nach Anspruch 10, dadurch gekennzeichnet, daß die Form an ihren unteren Enden Perforationsteile aufweist, die den umgeformten Boden des Y-Stückes während der Umformung so perforieren, daß ein fertiges Y-Rohr mit offenen Enden entsteht.

12. Verfahren nach Anspruch 10 oder 11, dadurch gekennzeichnet, daß die beiden neu aus dem Boden des napfförmigen Teils gebildeten Böden des Y-Teiles in an sich bekannter Weise abgetrennt werden, um ein offenes Y-Teil zu erhalten.

13. Verfahren nach einem der Ansprüche 10 bis 12, dadurch gekennzeichnet, daß man mehrere ineinander angeordnete napfförmige Teile verschiedener Materialien als Ausgangsmaterial für das Umformen nimmt.

14. Verfahren nach einem der Ansprüche 10 bis 13, dadurch gekennzeichnet, daß man das Y-Rohr zusätzlich in der Form mit Rippen ausformt.

15. Verfahren nach irgendeinem der Ansprüche 10 bis 13, dadurch gekennzeichnet, daß man das napfförmige Ausgangsprodukt an mindestens einem Ende in ein Verbindungsprofil, eine Sicke oder ein Gewinde, umformt.
